# EUROPÄISCHE PATENTSCHRIFT

(11) **EP 3 332 486 B1**
(45) Veröffentlichungstag und Bekanntmachung des Hinweises auf die Patenterteilung: **11.09.2024**
(21) Anmeldenummer: 16744679.8
(22) Anmeldetag: 12.07.2016
(51) Int. Cl.: H04B 3/54, H04B 3/56, H04L 25/02

(54) **SCHALTUNGSELEMENT ZUR DATENKOMMUNIKATION ÜBER EINE VERSORGUNGSLEITUNG**
CIRCUIT ELEMENT FOR DATA COMMUNICATION VIA A SUPPLY LINE
ÉLÉMENT DE CIRCUIT POUR LA COMMUNICATION DE DONNÉES SUR UNE LIGNE D'ALIMENTATION

(30) Priorität: 03.08.2015 DE 102015214754
(43) Veröffentlichungstag der Anmeldung: 13.06.2018
(73) Patentinhaber: Robert Bosch GmbH, 70442 Stuttgart (DE)
(72) Erfinder: NICKEL, Patrick, 63633 Birstein (DE)
(86) Internationale Anmeldenummer: PCT/EP2016/066467
(87) Internationale Veröffentlichungsnummer: WO 2017/021105

(56) Entgegenhaltungen:
- EP-A1- 1 487 128
- CN-U- 202 949 447
- KR-A- 20080 073 171
- US-A1- 2007 195 823
- US-A1- 2009 134 996
- PHILIPS: "DATA SHEET TDA5051 Home automation modem", 19 September 1997 (1997-09-19), XP055749569, Retrieved from the Internet <URL:http://pdf.datasheetcatalog.com/datasheet/philips/TDA5051T.pdf> [retrieved on 20201111]

## Beschreibung

Die Erfindung betrifft ein Schaltungselement zur Datenkommunikation über mindestens eine Versorgungsleitung.

### Stand der Technik

In heutigen Kraftfahrzeugen sind Module vorhanden, welche miteinander kommunizieren und Daten austauschen. Dabei handelt es beispielsweise um von Sensoren aufgenommene Messwerte, die zu Steuergeräten übertragen werden, sowie um Steuersignale zur Ansteuerung von Modulen.

Zur Übertragung von Daten zwischen Steuergeräten werden beispielsweise Bussysteme wie CAN oder Ethernet eingesetzt. Diese Bussysteme umfassen dabei Versorgungsleitungen zur Versorgung der Steuergeräte mit elektrischer Energie und davon separate Datenleitungen zur Übertragung der Daten von und zu den Steuergeräten.

Es sind auch Systeme zur Datenübertragung bekannt, bei welchen Daten über die Versorgungsleitungen mit übertragen werden. Die Versorgungsleitungen führen dabei eine Versorgungsspannung in Form einer niederfrequenten Spannung, beispielsweise 50 Hz, oder in Form einer Gleichspannung. Die Daten werden dabei als hochfrequente Signale über die Versorgungsleitungen übertragen.

Die Steuergeräte weisen entsprechende Schaltungen auf, um die hochfrequenten Signale von der Versorgungsspannung zu trennen. Dabei sind insbesondere Tiefpassschaltungen zur Auskopplung der Versorgungsspannung und Hochpassschaltungen zur Auskopplung der hochfrequenten Signale aus den Versorgungsleitungen vorgesehen.

Aus der DE 10 2013 105 209 A1 sind ein Verfahren und ein System zur Übertragung von Daten zwischen Kommunikationseinheiten über Gleichspannungsleitungen bekannt. Dabei umfasst jede Kommunikationseinheit einen Transformator mit zwei magnetisch gekoppelten Wicklungen. Eine der beiden Wicklungen ist dabei in die Gleichspannungsleitung eingeschleift, und über die andere Wicklung sind die Daten aus der Gleichspannungsleitung auskoppelbar sowie in die Gleichspannungsleitung einkoppelbar.

Aus der US 2005/0069321 A1 ist eine Koppelschaltungsanordnung für eine Datenübertragung über Wechselspannungsleitungen bekannt. Die Koppelschaltungsanordnung umfasst dabei eine Energieversorgungsschaltung, welche aus der Wechselspannungsleitung eine niederfrequente Wechselspannung auskoppelt und gleichrichtet. Ferner umfasst die Koppelschaltungsanordnung eine Bandpassschaltung zur Auskopplung von Daten aus der Wechselspannungsleitung.

Eine Modulator/Demodulator-Einheit für eine Wechselspannungsleitung, insbesondere für eine Mittelspannungsleitung mit einer Nennspannung von 12 kV, ist aus der WO 2013/127909 A1 bekannt.

Aus der KR 2008 0073171 A ist ein weiteres Beispiel für ein Schaltungselement zur Datenkommunikation über eine Versorgungsleitung bekannt.

### Offenbarung der Erfindung

Es wird ein Schaltungselement zur Datenkommunikation über mindestens eine Versorgungsleitung vorgeschlagen. Das Schaltungselement umfasst dabei mindestens eine Kommunikationsschnittstelle zum Anschluss an die mindestens eine Versorgungsleitung, mindestens eine Versorgungsschnittstelle, die über eine Koppelspule mit der mindestens einen Kommunikationsschnittstelle verbunden ist, und mindestens eine Datenschnittstelle, die mit einer sekundären Kommunikationseinheit verbunden ist.

Die Versorgungsleitung dient dabei zur Übertragung einer Versorgungsspannung zur Versorgung des Schaltungselements und weiterer Module mit elektrischer Energie. Bei der Versorgungsspannung handelt es sich insbesondere um eine Gleichspannung, und bei der Versorgungsleitung handelt es sich insbesondere um eine Gleichspannungsleitung. Aber auch eine niederfrequente Wechselspannung mit einer Frequenz von beispielsweise 50 Hz oder 60 Hz ist als Versorgungsspannung denkbar. Die Versorgungsleitung dient ebenso zur Übertragung von Daten. Die Daten liegen dabei in Form von hochfrequenten Signalen vor und sind der besagten Versorgungsspannung, also der Gleichspannung oder der niederfrequenten Wechselspannung, überlagert. Für die hochfrequenten Signale stellt die Koppelspule eine verhältnismäßig hohe Impedanz dar. Somit liegt an der Versorgungsschnittstelle beispielsweise eine zumindest annähernd geglättete Gleichspannung an, während die hochfrequenten Signale an der Versorgungsschnittstelle nicht oder nur sehr stark gedämpft vorhanden sind.

Erfindungsgemäß ist die Kommunikationsschnittstelle dabei über einen Koppelkondensator mit einer primären Kommunikationseinheit verbunden, und es ist eine Koppeleinheit vorgesehen, mittels welcher die Kommunikationseinheiten miteinander koppelbar sind.

Für die hochfrequenten Signale stellt der Koppelkondensator eine verhältnismäßig geringe Impedanz dar. Somit liegen an der primären Kommunikationseinheit nur die hochfrequenten Signale an, während die Versorgungsspannung von dem Koppelkondensator geblockt wird.

Die primäre Kommunikationseinheit und die sekundäre Kommunikationseinheit sind dabei innerhalb des Schaltungselements angeordnet. Die primäre Kommunikationseinheit, die über die Kommunikationsschnittstelle mit der Versorgungsleitung verbunden ist, dient zur Datenkommunikation über die Versorgungsleitung. Die sekundäre Kommunikationseinheit, die mit der Datenschnittstelle verbunden ist, dient zur Kommunikation mit Komponenten, die an die Datenschnittstelle angeschlossen sind, beispielsweise mit Sensoren oder mit Bussystemen wie CAN-Bus oder Ethernet.

Gemäß der Erfindung ist die Kommunikationsschnittstelle zweipolig ausgebildet, und ein Pol der Kommunikationsschnittstelle ist direkt mit einem Pol der zweipolig ausgebildeten Versorgungsschnittstelle verbunden. Die Verbindung zwischen der Kommunikationsschnittstelle und der Versorgungsschnittstelle ist somit asymmetrisch ausgeführt.

Der Pol der Kommunikationsschnittstelle und der Pol der Versorgungsschnittstelle, die direkt miteinander verbunden sind, sind mit einer Masse verbunden. Dabei können der Pol der Kommunikationsschnittstelle und der Pol der Versorgungsschnittstelle auch direkt mit einer gemeinsamen Masse, beispielsweise einem Gehäuse oder einer Fahrzeugkarosserie, verbunden sein. In diesem Fall ist nur eine einzige Ader für die Verdrahtung der Versorgungsleitung erforderlich.

Gemäß noch einer vorteilhaften Ausgestaltung der Erfindung ist die Kommunikationsschnittstelle zweipolig ausgebildet, und jeder Pol der Kommunikationsschnittstelle ist über einen separaten Koppelkondensator mit je einem Pol der zweipolig ausgebildeten primären Kommunikationseinheit verbunden.

Gemäß noch einer anderen vorteilhaften Ausgestaltung der Erfindung ist die Kommunikationsschnittstelle zweipolig ausgebildet, und ein Pol der Kommunikationsschnittstelle ist direkt mit einem Pol der zweipolig ausgebildeten primären Kommunikationseinheit verbunden.

Gemäß der Erfindung weist jede primäre Kommunikationseinheit eine Modulatorschaltung und/oder eine Demodulatorschaltung zur Modulation und/oder zur Demodulation der hochfrequenten Signale auf. Beispielsweise sind Single-Carrier-Modulationsverfahren sowie Multi-Carrier-Modulationsverfahren einsetzbar.

Gemäß der Erfindung weist die Koppeleinheit Mittel zur Umsetzung verschiedener Kommunikationsprotokolle auf.

Vorteilhaft ist zwischen der Kommunikationsschnittstelle und der primären Kommunikationseinheit zusätzlich ein Bandpassfilter, insbesondere ein Bandpassfilter höherer Ordnung, vorgesehen. Dadurch ist die Qualität der ausgekoppelten Signale verbessert.

Ein erfindungsgemäßes Schaltungselement findet vorteilhaft Verwendung in einem Elektrofahrzeug (EV), in einem Hybridfahrzeug (HEV) oder in einem Plug-In-Hybridfahrzeug (PHEV).

### Vorteile der Erfindung

Das erfindungsgemäße Schaltungselement ist zur Datenkommunikation über eine Gleichspannungsleitung mit einer Gleichspannung konzipiert. Aber auch eine Datenkommunikation über eine Wechselspannungsleitung mit einer niederfrequenten Wechselspannung, beispielsweise mit einer Frequenz von 50 Hz, ist möglich.

Das erfindungsgemäße Schaltungselement ist als Sender ebenso wie als Empfänger einsetzbar. Auch eine Kommunikation in beide Richtungen im Duplexbetrieb im Zeitbereich sowie im Frequenzbereich ist möglich. Hierbei ist für jede Kommunikationsrichtung ein fester Zeitschlitz oder eine separate Frequenz vorgesehen.

Das Schaltungselement ist für eine Punkt-zu-Punkt-Verbindung ebenso einsetzbar wie in einem Bussystem. Die Kommunikation kann beispielsweise durch Pakete, ähnlich wie bei Ethernet, erfolgen. Insbesondere kann die Kommunikation über mehrere als Knotenpunkte fungierende Schaltungselemente hinweg erfolgen. Auch eine Verschlüsselung und Entschlüsselung des Datenverkehrs sowie einer Authentifizierung des Schaltungselements als Teilnehmer in dem Bussystem sind möglich.

Ferner ist das Schaltungselement auch als Gateway zwischen zwei Bussystemen einsetzbar. Dabei ist die Versorgungsleitung des einen Bussystems über eine Kommunikationsschnittstelle mit einer primären Kommunikationseinheit verbunden, und die Versorgungsleitung des weiteren Bussystems ist über eine weitere Kommunikationsschnittstelle mit einer weiteren primären Kommunikationseinheit verbunden. Die Koppeleinheit weist entsprechende Mittel zur Kopplung der beiden Kommunikationseinheiten und zur Umsetzung der jeweiligen Kommunikationsprotokolle, beispielsweise von CAN auf Ethernet, auf. Auch eine Arbitrierung eines CAN-Busses zur Verbindung mehrerer Segmente eines CAN-Netzwerks ist denkbar.

### Kurze Beschreibung der Zeichnungen

Ausführungsformen der Erfindung werden anhand der Zeichnungen und der nachfolgenden Beschreibung näher erläutert. Es zeigen:
- Figur 1: eine schematische Darstellung eines Schaltungselements,
- Figur 2: eine schematische Darstellung einer beispielhaften Topologie eines Kommunikationssystems und
- Figur 3: eine schematische Darstellung eines Kommunikationssystems mit vereinfachten Schaltungselementen.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

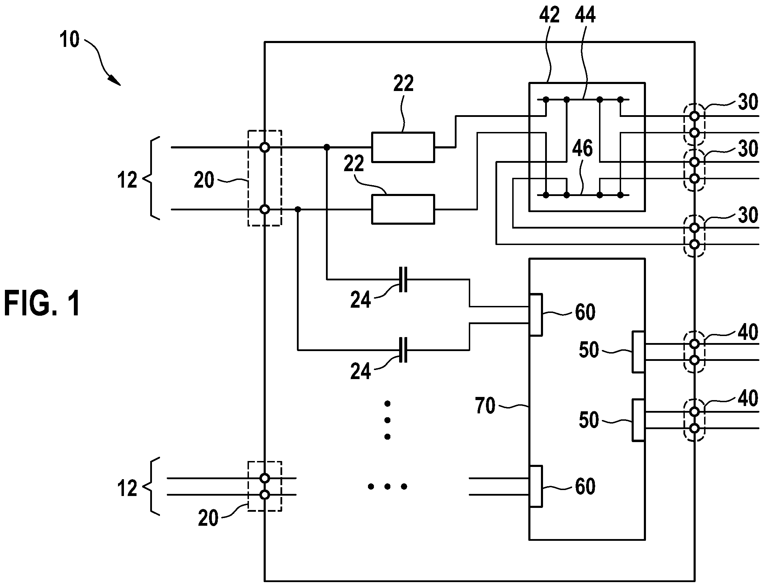

In Figur 1 ist eine schematische Darstellung eines Schaltungselements 10 zur Datenkommunikation über eine Versorgungsleitung 12 gezeigt. Das Schaltungselement 10 umfasst vorliegend mehrere Kommunikationsschnittstellen 20 zum Anschluss an jeweils eine Versorgungsleitung 12. Die Versorgungsleitung 12 ist vorliegend eine Gleichspannungsleitung. In der gezeigten Darstellung ist dabei nur eine der Kommunikationsschnittstellen 20 detailliert dargestellt, während eine weitere Kommunikationsschnittstelle 20 nur angedeutet ist.

Jede der Kommunikationsschnittstellen 20 ist vorliegend zweipolig ausgeführt und umfasst einen Pluspol und einen Minuspol. Jeder Pol der Kommunikationsschnittstelle 20 ist über eine Koppelspule 22 mit einer Versorgungseinheit 42 verbunden, welche wiederum mit mehreren, vorliegend drei, Versorgungsschnittstellen 30 verbunden ist. Jede der Kommunikationsschnittstellen 20 ist somit über zwei Koppelspulen 22 mit den Versorgungsschnittstellen 30 verbunden.

Auch jede der Versorgungsschnittstellen 30 ist vorliegend zweipolig ausgeführt und umfasst einen Pluspol und einen Minuspol. Die Versorgungsschnittstellen 30 dienen zum Einspeisen von elektrischer Energie durch Anlegen einer Versorgungsspannung, vorliegend einer Gleichspannung. Die angelegte Versorgungsspannung wird über die Koppelspulen 22 in die Versorgungsleitungen 12 eingespeist. Die Versorgungsschnittstellen 30 dienen auch zum Weiterleiten von elektrischer Energie, welche über eine andere Versorgungsschnittstelle 30 oder über eine Versorgungsleitung 12 eingespeist wird.

Die Versorgungseinheit 42 umfasst dazu eine erste Sammelschiene 44 und eine zweite Sammelschiene 46. Die Pluspole der Kommunikationsschnittstellen 20 sind über jeweils eine Koppelspule 22 mit der ersten Sammelschiene 44 der Versorgungseinheit 42 verbunden, und die Minuspole der Kommunikationsschnittstellen 20 sind über jeweils eine Koppelspule 22 mit der zweiten Sammelschiene 46 der Versorgungseinheit 42 verbunden.

Die Pluspole der Versorgungsschnittstellen 30 sind mit der ersten Sammelschiene 44 der Versorgungseinheit 42 verbunden, und die Minuspole der Versorgungsschnittstellen 30 sind mit der zweiten Sammelschiene 46 der Versorgungseinheit 42 verbunden. Zur Glättung der Gleichspannung sowie zur Reduktion von hochfrequenten Störungen können zusätzlich Stützkondensatoren zwischen die Sammelschienen 44, 46 oder zwischen die Pole einer der Versorgungsschnittstellen 30 geschaltet werden.

Jeder Pol der Kommunikationsschnittstelle 20 ist ferner über einen Koppelkondensator 24 mit einer primären Kommunikationseinheit 60 verbunden. Die primäre Kommunikationseinheit 60 weist eine Modulatorschaltung zur Modulation von zu übertragenden Signalen auf. Ebenso weist die primäre Kommunikationseinheit 60 eine Demodulatorschaltung zur Demodulation von empfangenen Signalen auf.

Wie bereits erwähnt, umfasst das Schaltungselement 10 mehrere Kommunikationsschnittstellen 20, wobei in der gezeigten Darstellung nur eine der Kommunikationsschnittstellen 20 detailliert dargestellt ist. Die weiteren Kommunikationsschnittstellen 20 sind gleichartig zu der detailliert dargestellten Kommunikationsschnittstelle 20 ausgebildet und über separate Koppelkondensatoren 24 mit jeweils einer separaten primären Kommunikationseinheit 60 verbunden.

Das Schaltungselement 10 umfasst auch mehrere, vorliegend zwei, Datenschnittstellen 40 zum Anschluss an jeweils einen Sensor oder an ein separates Bussystem, beispielsweise CAB-Bus oder Ethernet. Jede der Datenschnittstellen 40 ist dabei vorliegend zweipolig ausgeführt und mit einer separaten sekundären Kommunikationseinheit 50 verbunden.

Die sekundären Kommunikationseinheiten 50 sind ebenso wie die primären Kommunikationseinheiten 60 innerhalb des Schaltungselements 10 angeordnet. Die primären Kommunikationseinheiten 60 dienen zur Datenkommunikation über die Versorgungsleitungen 12. Die sekundären Kommunikationseinheiten 50 dienen zur Kommunikation mit an den Datenschnittstellen 40 angeschlossenen Komponenten.

Die sekundären Kommunikationseinheiten 50 und die primären Kommunikationseinheiten 60 sind mit einer Koppeleinheit 70 verbunden. Mittels der Koppeleinheit 70 sind die sekundären Kommunikationseinheiten 50 und die primären Kommunikationseinheiten 60 paarweise koppelbar. Das bedeutet, es kann jeweils eine der primären Kommunikationseinheiten 60 oder eine der sekundären Kommunikationseinheit 50 mit jeweils einer anderen der primären Kommunikationseinheiten 60 oder einer anderen der sekundären Kommunikationseinheit 50 gekoppelt werden.

Die Koppeleinheit 70 weist dazu Mittel zur Umsetzung verschiedener Kommunikationsprotokolle, beispielsweise von CAN auf Ethernet, auf. Somit ist das Schaltungselement 10 beispielsweise als Gateway zwischen zwei verschiedenen Bussystemen einsetzbar. Weiterhin kann die Koppeleinheit 70 auch als Vermittlungseinheit von mehr als zwei Teilnehmern innerhalb des gleichen Bussystems als Data Switch genutzt werden.

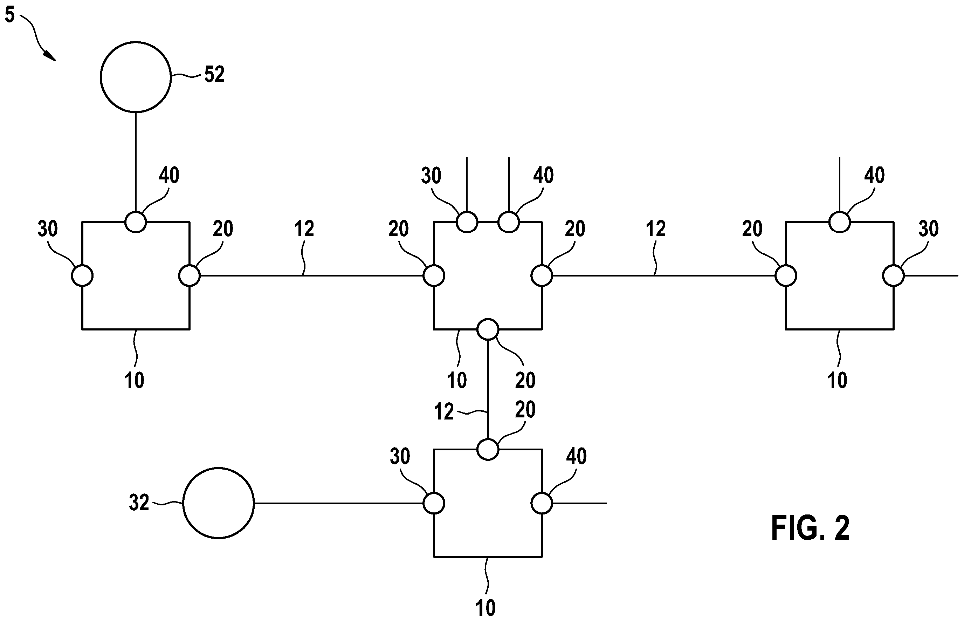

In Figur 2 ist eine beispielhaften Topologie eines Kommunikationssystems 5 mit mehreren, vorliegend vier, Schaltungselementen 10 schematisch darstellt. Die Kommunikationsschnittstellen 20, die Versorgungsschnittstellen 30 sowie die Datenschnittstellen 40 der einzelnen Schaltungselementen 10 sind jeweils zweipolig ausgeführt, aber in dieser Darstellung nur einpolig gezeichnet. Ebenso sind die zwischen den Schaltungselementen 10 vorgesehenen Versorgungsleitungen 12 jeweils zweipolig ausgeführt, aber in dieser Darstellung nur einpolig gezeichnet.

Die Versorgungsschnittstelle 30 von einem der Schaltungselemente 10 ist mit einer Spannungsversorgung 32 verbunden, welche vorliegend eine Gleichspannung an die Pole der besagten Versorgungsschnittstelle 30 anlegt. Dadurch speist die Spannungsversorgung 32 elektrische Energie in das Kommunikationssystem 5 ein. Die angelegte Gleichspannung wird über die nicht dargestellten Koppelspulen 22 in eine der Versorgungsleitungen 12 eingespeist und zu dem nächsten der Schaltungselemente 10 weitergeleitet. Von dort wird die Gleichspannung wieder über eine der Versorgungsleitungen 12 zu dem jeweils nächsten der Schaltungselemente 10 weitergeleitet.

Die Datenschnittstelle 40 von einem der Schaltungselemente 10 ist mit einem separaten Bussystem 52 verbunden. Daten von diesem separaten Bussystem 52 werden in Form hochfrequenter Signale von der besagten Datenschnittstelle 40 des Schaltungselements 10 in eine der Versorgungsleitungen 12 eingekoppelt.

Das in der gezeigten Darstellung zentral gelegene Schaltungselement 10 des Kommunikationssystems 5 dient als Gateway. Das bedeutet, das besagte Schaltungselement 10 empfängt Daten von einer der Versorgungsleitungen 12 und koppelt die empfangenen Daten in die anderen angeschlossenen Versorgungsleitungen 12 ein. Das besagte, zentral gelegene Schaltungselement 10 weist dazu vorliegend drei Kommunikationsschnittstellen 20 auf.

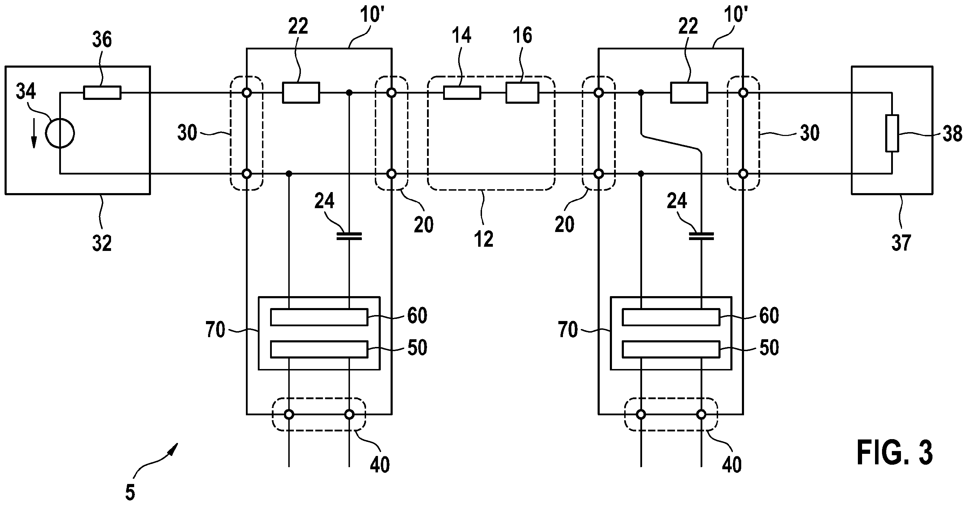

Figur 3 zeigt eine schematische Darstellung eines Kommunikationssystems 5 mit vereinfachten Schaltungselementen 10'. Die vereinfachten Schaltungselemente 10' sind dabei an eine Versorgungsleitung 12 angeschlossen. Die Versorgungsleitung 12 weist einen ohmschen Leitungswiderstand 14 und eine Leitungsinduktivität 16 auf. Der ohmsche Leitungswiderstand 14 sowie die Leitungsinduktivität 16 sind in dieser Darstellung nur in einer Ader der Versorgungsleitung 12 eingezeichnet.

Jedes der vereinfachten Schaltungselemente 10' umfasst eine zweipolig ausgeführte Kommunikationsschnittstelle 20 und eine zweipolig ausgeführte Versorgungsschnittstelle 30. Ein Pol der Kommunikationsschnittstelle 20 ist dabei direkt mit einem Pol der Versorgungsschnittstelle 30 verbunden. Der andere Pol der Kommunikationsschnittstelle 20 ist über eine Koppelspule 22 mit dem anderen Pol der Versorgungsschnittstelle 30 verbunden.

Auch umfasst jedes der vereinfachten Schaltungselemente 10' eine zweipolig ausgeführte primäre Kommunikationseinheit 60. Ein Pol der Kommunikationsschnittstelle 20 ist dabei direkt mit einem Pol der primären Kommunikationseinheit 60 verbunden. Der andere Pol der Kommunikationsschnittstelle 20 ist über einen Koppelkondensator 24 mit dem anderen Pol der primären Kommunikationseinheit 60 verbunden.

Ferner umfasst jedes der vereinfachten Schaltungselemente 10' eine zweipolig ausgeführte Datenschnittstelle 40, welche mit einer zweipolig ausgeführten sekundären Kommunikationseinheit 50 verbunden ist. Auch umfasst jedes der vereinfachten Schaltungselemente 10' eine Koppeleinheit 70 zur Kopplung der sekundären Kommunikationseinheit 50 mit der primären Kommunikationseinheit 60.

Die Versorgungsschnittstelle 30 eines der vereinfachten Schaltungselemente 10' ist mit einer Spannungsversorgung 32 verbunden, welche vorliegend eine Gleichspannung einspeist. Die Spannungsversorgung 32 umfasst eine Spannungsquelle 34 sowie einen Innenwiderstand 36. Die Versorgungsschnittstelle 30 des anderen der vereinfachten Schaltungselemente 10' ist mit einem Verbraucher 37 verbunden. Der Verbraucher 37 umfasst einen Lastwiderstand 38.

Die Spannungsversorgung 32 speist somit elektrische Energie zur Versorgung der beiden vereinfachten Schaltungselemente 10' sowie des Verbrauchers 37 in das Kommunikationssystem 5 ein. Dabei wird elektrische Energie über die Versorgungsleitung 12 zwischen den beiden vereinfachten Schaltungselementen 10' übertragen.

Die Datenschnittstelle 40 von einem der vereinfachten Schaltungselemente 10' empfängt Daten, die in Form von hochfrequenten Signalen über den Koppelkondensator 24 in die Versorgungsleitung 12 eingekoppelt werden. Im dem anderen der vereinfachten Schaltungselemente 10' werden die hochfrequenten Signale über den Koppelkondensator 24 aus der Versorgungsleitung 12 ausgekoppelt, und die Daten werden an die Datenschnittstelle 40 des anderen der vereinfachten Schaltungselemente 10' übertragen.

Die Induktivität der Koppelspule 22 des vereinfachten Schaltungselements 10' sollte dabei verhältnismäßig groß sein. Insbesondere sollte die Induktivität 22 der Koppelspule 22 in dem vereinfachten Schaltungselement 10' größer sein als die Leitungsinduktivität 16 der Versorgungsleitung 12.

Diese Betrachtung ist auch für das in Figur 1 und Figur 2 gezeigte Schaltungselement 10 gültig. Das bedeutet, die Induktivität der beiden Koppelspulen 22 des Schaltungselements 10 sollte größer sein als die Leitungsinduktivität 16 einer an die Kommunikationsschnittstelle 20 angeschlossene Versorgungsleitung 12.

Die Erfindung ist nicht auf die beschriebenen Ausführungsbeispiele und die darin hervor gehobenen Aspekte beschränkt. Vielmehr ist innerhalb des durch die Ansprüche angegebenen Bereichs eine Vielzahl von Abwandlungen möglich, die im Rahmen des fachmännischen Handelns liegen.

## Patentansprüche

1. Schaltungselement (10,10') zur Datenkommunikation über mindestens eine Versorgungsleitung (12), umfassend mindestens eine Kommunikationsschnittstelle (20) zum Anschluss an die mindestens eine Versorgungsleitung (12),
mindestens eine über eine Koppelspule (22) mit der mindestens einen Kommunikationsschnittstelle (20) verbundene Versorgungsschnittstelle (30) und
mindestens eine mit einer sekundären Kommunikationseinheit (50) verbundene Datenschnittstelle (40), wobei
das Schaltungselement (10,10') mehrere Kommunikationsschnittstellen (20) zum Anschluss an jeweils eine Versorgungsleitung (12), welche über separate Koppelkondensatoren (24) mit jeweils einer separaten primären Kommunikationseinheit (60) verbunden sind, wobei jede primäre Kommunikationseinheit (60) eine Modulatorschaltung und/oder eine Demodulatorschaltung aufweist, und
mehrere Datenschnittstellen (40), wobei
jede der Datenschnittstellen (40) mit einer separaten sekundären Kommunikationseinheit (50) verbunden ist, umfasst, und wobei
mittels einer Koppeleinheit (70) jeweils eine der primären Kommunikationseinheiten (60) oder eine der sekundären Kommunikationseinheit (50) mit jeweils einer anderen der primären Kommunikationseinheiten (60) oder einer anderen der sekundären Kommunikationseinheit (50) koppelbar ist, wobei die Koppeleinheit (70) Mittel zur Umsetzung verschiedener Kommunikationsprotokolle aufweist, und wobei
die Kommunikationsschnittstelle (20) zweipolig ausgebildet ist, und dass ein Pol der Kommunikationsschnittstelle (20) direkt mit einem Pol der zweipolig ausgebildeten Versorgungsschnittstelle (30) und einer Masse verbunden ist.

2. Schaltungselement (10) nach Anspruch 1, **dadurch gekennzeichnet, dass** jeder Pol der Kommunikationsschnittstelle (20) über einen separaten Koppelkondensator (24) mit je einem Pol der zweipolig ausgebildeten primären Kommunikationseinheit (60) verbunden ist.

3. Schaltungselement (10,10') nach einem der Ansprüche 1 bis 2, **dadurch gekennzeichnet, dass**
ein Pol der Kommunikationsschnittstelle (20) direkt mit einem Pol der zweipolig ausgebildeten primären Kommunikationseinheit (60) verbunden ist.

4. Schaltungselement (10,10') nach einem der vorstehenden Ansprüche, **dadurch gekennzeichnet, dass**
zwischen der Kommunikationsschnittstelle (20) und der primären Kommunikationseinheit (60) zusätzlich ein Bandpassfilter vorgesehen ist.

## Claims

1. Circuit element (10, 10') for data communication via at least one supply line (12), comprising
at least one communication interface (20) for connecting to the at least one supply line (12),
at least one supply interface (30), which is connected to the at least one communication interface (20) by means of a coupling coil (22), and
at least one data interface (40), which is connected to a secondary communication unit (50), wherein
the circuit element (10, 10') comprises multiple communication interfaces (20) for connecting to a respective supply line (12),
which are connected to a respective separate primary communication unit (60) by means of separate coupling capacitors (24), wherein each primary communication unit (60) has a modulator circuit and/or a demodulator circuit, and
multiple data interfaces (40), wherein
each of the data interfaces (40) is connected to a separate secondary communication unit (50), and wherein
a coupling unit (70) can be used to couple each one of the primary communication units (60) or one of the secondary communication units (50) to another of the primary communication units (60) or another of the secondary communication units (50), wherein the coupling unit (70) has means for implementing various communication protocols, and wherein
the communication interface (20) is of two-pole design, and in that one pole of the communication interface (20) is connected directly to one pole of the two-pole supply interface (30) and to earth.

2. Circuit element (10) according to Claim 1, **characterized in that**
each pole of the communication interface (20) is connected to a respective pole of the two-pole primary communication unit (60) by means of a separate coupling capacitor (24).

3. Circuit element (10, 10') according to one of Claims 1 to 2, **characterized in that**
one pole of the communication interface (20) is connected directly to one pole of the two-pole primary communication unit (60).

4. Circuit element (10, 10') according to one of the preceding claims, **characterized in that**
a band-pass filter is additionally provided between the communication interface (20) and the primary communication unit (60).

## Revendications

1. Elément de circuit (10, 10') pour la communication de données par l'intermédiaire d'au moins une ligne d'alimentation (12), comprenant
au moins une interface de communication (20) pour la connexion à ladite au moins une ligne d'alimentation (12),
au moins une interface d'alimentation (30) reliée à ladite au moins une interface de communication (20) par l'intermédiaire d'une bobine de couplage (22), et
au moins une interface de données (40) reliée à une unité de communication secondaire (50), dans lequel l'élément de circuit (10, 10') comprend plusieurs interfaces de communication (20) pour la communication à une ligne d'alimentation (12) respectivement,
qui sont reliées à respectivement une unité de communication primaire (60) séparée par l'intermédiaire de condensateurs de couplage (24) séparés, dans lequel chaque unité de communication primaire (60) présente un circuit modulateur et/ou un circuit démodulateur, et
plusieurs interfaces de données (40), dans lequel chacune des interfaces de données (40) est reliée à une unité de communication secondaire (50) séparée, et dans lequel au moyen d'une unité de couplage (70),
respectivement l'une des unités de communication primaires (60) ou l'une des unités de communication secondaires (50) peut être couplée respectivement à une autre des unités de communication primaires (60) ou à une autre des unités de communication secondaires (50), l'unité de couplage (70) présentant des moyens pour mettre en oeuvre différents protocoles de communication, et dans lequel
l'interface de communication (20) est réalisée à deux pôles, et un pôle de l'interface de communication (20) est relié directement à un pôle de l'interface d'alimentation (30) réalisée à deux pôles et à une masse.

2. Elément de circuit (10) selon la revendication 1, **caractérisé en ce que** chaque pôle de l'interface de communication (20) est relié respectivement à un pôle de l'unité de communication primaire (60) réalisée à deux pôles, par l'intermédiaire d'un condensateur de couplage (24) séparé.

3. Elément de circuit (10, 10') selon l'une quelconque des revendications 1 à 2, **caractérisé en ce qu'**un
pôle de l'interface de communication (20) est relié directement à un pôle de l'unité de communication primaire (60) réalisée à deux pôles.

4. Elément de circuit (10, 10') selon l'une quelconque des revendications précédentes, **caractérisé en ce qu'**un
filtre passe-bande est en plus prévu entre l'interface de communication (20) et l'unité de communication primaire (60).
